# EUROPÄISCHE PATENTSCHRIFT

(11) **EP 3 424 133 B1**
(45) Veröffentlichungstag und Bekanntmachung des Hinweises auf die Patenterteilung: **08.07.2020**
(21) Anmeldenummer: 17706496.1
(22) Anmeldetag: 22.02.2017
(51) Int. Cl.: H02K 5/173, H02K 7/14, H02K 5/02, H02K 9/22, H02K 11/33

(54) **GEBLÄSE FÜR EINEN VERBRENNUNGSMOTOR**
FAN FOR AN ENGINE
VENTILATEUR POUR UN MOTEUR THERMIQUE

(30) Priorität: 29.02.2016 DE 102016103525
(43) Veröffentlichungstag der Anmeldung: 09.01.2019
(73) Patentinhaber: Pierburg GmbH, 41460 Neuss (DE)
(72) Erfinder: PETERS, Rainer, 47574 Goch (DE); OZDYK, Björn Jonas, 40229 Düsseldorf (DE); BOUTROS-MIKHAIL, Matthias, 41460 Neuss (DE)
(74) Vertreter: terpatent Patentanwälte ter Smitten Eberlein-Van Hoof Rütten Daubert
(86) Internationale Anmeldenummer: PCT/EP2017/054059
(87) Internationale Veröffentlichungsnummer: WO 2017/148770

(56) Entgegenhaltungen:
- EP-A1- 2 733 326
- WO-A1-2011/082887
- WO-A2-98/30790
- US-A1- 2003 223 892

## Beschreibung

Die Erfindung betrifft ein Gebläse für einen Verbrennungsmotor mit einem Elektromotor, der einen Stator mit einem Statorblech, auf welchem Statorwicklungen angeordnet sind, und einen Rotor aufweist, der auf einer Antriebswelle befestigt ist, einem Gehäuse, welches den Elektromotor umgibt, einem Förderkanal, welcher im Gehäuse ausgebildet ist, mit einem Ansaugstutzen, der einen Einlasskanal begrenzt und einem Auslassstutzen, der einen Auslasskanal begrenzt, sowie einem Laufrad, welches auf der Antriebswelle befestigt ist, und über welches Fluid vom Einlasskanal über den Förderkanal zum Auslasskanal förderbar ist.

Derartige Gebläse werden beisplelswiese zur Förderung von Sekundärluft in Verbrennungsmotoren, insbesondere in Ottomotoren verwendet, mit denen Luft während der Kaltstartphase zur thermischen Nachverbrennung in den Abgasstrang eingeblasen wird. Hierdurch werden Kohlenwasserstoffe und Kohlenmonoxide während der Warmlaufphase verringert, da die Luft exotherm mit unverbrannten Abgasbestandteilen reagiert, wodurch auch die Aufheizung des Katalysators unterstützt wird.

In den bekannten Motorsteuerungen wurden diese Gebläse aufgrund der in den letzten Jahren stetig verkürzten Warmlaufphasen in der Regel lediglich etwa 30 Sekunden betrieben. Aufgrund der stetig steigenden Anforderungen zur Reduzierung von Schadstoffen in Verbrennungsmotoren ist jedoch eine Verlängerung der Laufzeiten in den nächsten Jahren zu erwarten. Zusätzlich werden diese Gebläse auch zur Partikelfilterregeneration und in Zukunft wohl auch zur Regenerierung der die Kohlenwasserstoffe aus dem Tank filternden Aktivkohlefilter genutzt, wodurch sich die Laufzeiten dieser Gebläse voraussichtlich deutlich verlängern werden.

Problematisch an einer solchen Verlängerung der Laufzeiten ist es jedoch, dass die Gebläse hierdurch einer deutlich höheren thermischen Belastung ausgesetzt ist, da sich sowohl die Elektronikeinheiten als auch die Wicklungen der antreibenden Elektromotoren bei längeren Laufzeiten stetig erwärmen,

Sekundärluftgebläse sind allgemein bekannt und werden in den letzten Jahren zumeist als Seitenkanalgebläse ausgeführt. Ein solches Seitenkanalgebläse, wie es beispielsweise in der DE 10 2010 046 870 A1 beschrieben wird, weist zumeist einen axialen Einlass sowie einen radialen Auslass auf, zwischen denen die als Förderkanal im Gebläsekopf dienenden Seitenkanäle ausgebildet sind, die gegenüber liegend zu einem antreibbaren Laufrad angeordnet sind, durch dessen Drehung die Förderung vom Einlass zum Auslass erfolgt.

Aus der EP 1 152 134 B1 ist zusätzlich ein Sekundärluftgebläse bekannt, dessen Ansaugstutzen zwei 90°-Krümmer aufweist, so dass sich ein Abschnitt des Ansaugstutzens parallel zur Motorachse erstreckt. Entsprechend können die Motorsteuerung und ein Luftmassenmesser, über den ein Luftstrom im Ansaugstutzen gemessen wird, in einem gemeinsamen Gehäuse angeordnet werden, welches am Ansaugstutzen befestigt wird.

Des Weiteren ist aus der WO 98/30790 A1 ein Kompressor bekannt, in dessen Inneren ein Elektromotor angeordnet ist, der in einem Gehäuseteil platziert ist, welches von einem zweiten Gehäusteil konzentrisch umgeben ist. Das innere und das äußere Gehäuseteil werden durchströmt und bilden einen Einlasskanal, so dass der Stator durch die durch ihn hindurch strömende Luft gekühlt wird.

In der US 2003/0223892 A1 wird ein Turbolader beschrieben, dessen Kompressor mit einem Elektromotor verbunden ist, der ebenfalls in einem Gehäuseteil angeordnet ist, welches von einem weiteren Gehäuseteil umgeben ist. Auch hier werden beide Gehäuseteile beim Ansaugen der Luft durchströmt.

Bei einem längeren Betrieb dieser bekannten Gebläse besteht jedoch das Risiko, dass im Bereich der Wicklungen eine Temperatur entsteht, die die zulässige Wicklungstemperatur übersteigt, so dass der Elektromotor aufgrund thermischer Überlastung droht auszufallen.

Es stellt sich daher die Aufgabe, ein Gebläse für einen Verbrennungsmotor bereit zu stellen, welcher über längere Laufzeiten zuverlässig arbeitet, ohne zu überhitzen. Der Aufbau des Gebläses soll dabei möglichst einfach bleiben, so dass keine zusätzlichen Kosten bei der Herstellung entstehen.

Diese Aufgabe wird durch ein Gebläse mit den Merkmalen des Hauptanspruchs 1 gelöst.

Dadurch, dass die Statorwicklungen mit einer wärmeleitfähigen Vergussmasse umspritzt sind, wobei das den Stator umgebende Gehäuse und der Ansaugstutzen eine gemeinsame Wandfläche aufweisen, an deren einen Seite der Stator anliegt und an deren entgegengesetzter Seite der Einlasskanal ausgebildet ist, wobei das Gebläse ein Seitenkanalgebläse ist, findet eine unmittelbare Wärmeabfuhr der in den Statorwicklungen erzeugten Wärme statt. Der Wärmefluss erfolgt dabei von den Wicklungen zur gut wärmeleitfähigen Vergussmasse, welche insbesondere aus Kunststoff mit Füllstoffen hergestellt ist, und von dort über das ebenfalls wärmeleitende Statorblech zum umliegenden Gehäuse. Dieses wird durch die angesaugte Luft unmittelbar abgekühlt, da der Ansaugstutzen die gemeinsame Wandfläche mit dem Gehäuse aufweist. Zusätzlich wird durch die wärmeleitfähige Vergussmasse auch eine Verkapselung der Wicklungen erreicht, so dass das strömende Medium von den Wicklungen chemisch getrennt ist. Diese Gebläse weisen einen hohen Wirkungsgrad bei geringem Energieverbrauch auf und liefern eine weitestgehend pulsationsfreie Strömung.

Vorzugsweise liegt das Statorblech über seine gesamte axiale Länge vollumfänglich am Gehäuse an und die Vergussmasse liegt über die gesamte axiale Länge der Statorwicklungen vollumfänglich am Statorblech und/oder am Gehäuse an. Entsprechend wird die volle Länge und der gesamte Umfang des Stators für den Wärmeübergang von den Wicklungen über die Vergussmasse, das Gehäuse und in den Luftstrom genutzt, so dass die thermische Aufheizung deutlich reduziert wird und wesentlich längere Laufzeiten erreicht werden.

In einer weiteren vorteilhaften Ausführungsform ist eine Elektronik des Gebläses in einem Elektronikraum angeordnet, welcher durch eine Wandfläche des Ansaugstutzens in Richtung des Ansaugstutzens begrenzt ist. Entsprechend kann auch die in der Elektronik entstehende Wärme über den Ansaugstutzen und die durch den Ansaugstutzen geförderte Luft direkt abgeführt werden.

Eine besonders gute Wärmeabfuhr ergibt sich, wenn die Elektronik des Gebläses auf einer Platine angeordnet ist, welche thermisch mit der Wandfläche des Ansaugstutzens gekoppelt ist, welche den Elektronikraum begrenzt. Durch diesen unmittelbaren Kontakt zum Ansaugstutzen wird die Wärmeabfuhr noch einmal verbessert, da die Wand des Ansaugstutzens als Kühlkörper dient.

Vorzugsweise ist ein zwischen dem Laufrad und dem Stator des Elektromotors angeordnetes Lager in einer Lageraufnahme angeordnet, die am Gehäuse ausgebildet ist, so dass auch die am Lager entstehende Wärme direkt über das Gehäuse und den Luftstrom im Einlasskanal abgeführt werden kann.

In einer alternativen bevorzugten Ausführungsform ist ein zwischen dem Laufrad und dem Stator des Elektromotors angeordnetes Lager in einer Lageraufnahme angeordnet, die im radial Inneren eines Lagerschildes ausgebildet ist, das vollflächig axial gegen das Gehäuse anliegt, wobei die Lageraufnahme in einer Öffnung des Gehäuses angeordnet ist und radial an einer die Öffnung begrenzenden Wand des Gehäuses anliegt. Bei dieser Ausführung kann der Motor mit der Lageraufnahme vormontiert in das Gehäuse eingesteckt werden, wobei dennoch eine großflächige Anbindung der Lageraufnahme zum Gehäuse erzeugt wird, so dass eine Überhitzung des Lagers zuverlässig vermieden wird.

Vorteilhafterweise liegt das Statorblech vollflächig radial an einer Innenwand des Gehäuses an, so dass der Wärmeübergang großflächig unmittelbar vom Statorblech zum Gehäuse erfolgen kann, welches durch den Luftstrom am Einlasskanal aktiv gekühlt wird.

Besonders vorteilhaft ist es, wenn ein den Stator radial umgebendes Gehäuseteil des Gehäuses aus Leichtmetall hergestellt ist, da Leichtmetall einen guten Wärmeübergangskoeffizienten aufweist, wodurch eine große Wärmemenge über das Gehäuse abgeführt werden kann.

Eine verbesserte Abfuhr der Wärme aus dem B-Lager des Elektromotors wird dadurch erreicht, dass ein am zum Laufrad entgegengesetzten Ende des Elektromotors angeordnetes Lager in einer Lageraufnahme angeordnet ist, welche über Stege mit dem Gehäuse verbunden ist. In dieser Ausführung kann die Wärme aus dem Lager über die Stege erneut unmittelbar an das Gehäuse abgeführt werden.

Auch wird eine gute Wärmeabfuhr erreicht, wenn der Elektromotor direkt in das Gehäuse des Gebläses eingesetzt wird und das am zum Laufrad entgegengesetzten Ende des Elektromotors angeordnete Lager in einer Lageraufnahme angeordnet ist, welche an einem Gehäuseteil des Gehäuses ausgebildet ist.

Ein guter Wärmeübergang wird dabei insbesondere erzielt, wenn die Lageraufnahme mit den Stegen oder das Gehäuseteil, in dem die Lageraufnahme ausgebildet ist, aus einem Leichtmetallgussteil gebildet ist.

Vorzugsweise wird das Gehäuse mehrteilig ausgebildet, wodurch die Montage des Gebläses erleichtert wird.

Eine besonders gute Wärmeabfuhr durch die Umspritzung der Statorwicklungen mit der Vergussmasse wird erreicht, wenn die Vergussmasse ein Kunstsoff mit Füllstoffen ist und einen Wärmeleitkoeffizienten von über 5W/m·K aufweist. Da die meisten Kunststoffe eher isolierend wirken, kann durch den Zusatz derartiger unmagnetischer Füllstoffe der Wärmeübergangskoeffizient beträchtlich erhöht werden, so dass nicht nur die Fläche zur Wärmeübertragung erhöht wird, sondern gleichzeitig auch die Wärmeleitung selbst.

Insbesondere können diese Füllstoffe auf mineralischer Basis hergestellt sein. Mit derartigen Füllstoffen ist es möglich Wärmeleitkoeffizienten von über 20W/m·K für den Kunststoff zu erreichen.

Es wird somit ein Gebläse geschaffen, mit dem deutlich erhöhte Laufzeiten erreichbar sind, ohne ein Überhitzen des Gebläses befürchten zu müssen, da alle thermisch überlastbaren Bauteile mit einer deutlich verbesserten Wärmeabfuhr ausgestattet sind. Sowohl die Lager als auch die Elektronik und die Statorwicklungen werden durch die gut wärmeleitende Verbindung zum Ansaugstutzen aktiv durch den dort herrschenden Luftstrom gekühlt, so dass die Aufheizzeiten im Vergleich zu bekannten Ausführungen derartiger Gebläse vervielfacht werden.

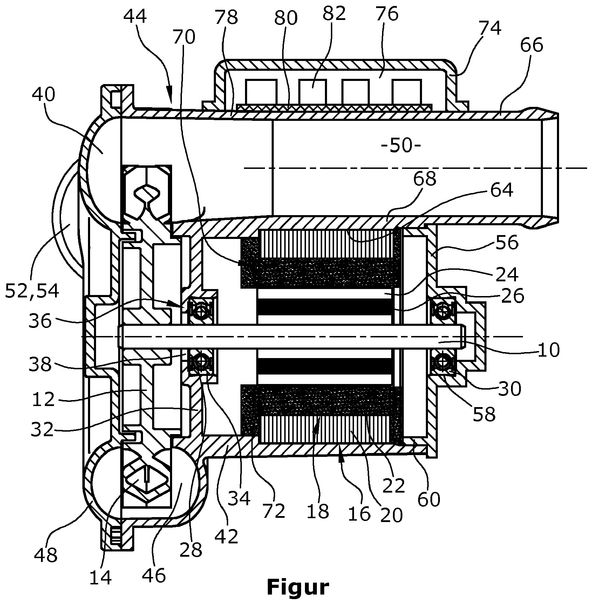

Ein Ausführungsbeispiel eines erfindungsgemäßen Gebläses für einen Verbrennungsmotor wird anhand eines Seitenkanalgebläses, welches zur Sekundärluftzuführung oder zur Aktivkohlefilterreinigung geeignet ist, beschrieben und ist in der Figur dargestellt.

Die Figur zeigt eine Seitenansicht eines erfindungsgemäßen Seitenkanalgebläses in geschnittener Darstellung.

Das erfindungsgemäße Seitenkanalgebläse weist ein auf einer Antriebswelle 10 befestigtes Laufrad 12 mit Laufradschaufeln 14 auf, welche über einen Elektromotor 16 in Drehung versetzbar sind. Der Elektromotor 16 besteht aus einem Stator 18, welcher ein auf Zähne eines Statorblechs 20 gewickelte Statorwicklungen 22 aufweist, und aus einem Rotor 24, in dem Magnete 26 befestigt sind, welche in bekannter Weise mit den Statorwicklungen 22 zur Erzeugung eines Drehmomentes bei Bestromung der Statorwicklungen 22 zusammenwirken. Der Rotor 24 ist auf der Antriebswelle 10 befestigt, so dass diese bei Drehung des Rotors 24 ebenfalls in Drehung versetzt wird.

Hierzu ist die Antriebswelle 10 über zwei Lager 28, 30 gelagert, von denen ein erstes Lager 28 axial zwischen dem Laufrad 12 und dem Rotor 24 angeordnet ist und ein zweites Lager 30 am vom Laufrad 12 abgewandten Ende der Antriebswelle 10 an der entgegengesetzten Seite des Rotors 24 angeordnet ist. Im radial Inneren eines Lagerschildes 32 ist an einem ringförmigen Vorsprung 34 des Lagerschildes 32 eine Lageraufnahme 36 ausgebildet, in der das erste Lager 28 aufgenommen ist, und welches eine zentrale Öffnung 38 aufweist, durch die die Antriebswelle 10 ragt. Das Lagerschild 32 begrenzt gleichzeitig einen Strömungsraum des Gebläses in Richtung des Elektromotors 16 und ist einstückig mit einem ersten Gehäuseteil 42 eines Gehäuses 44 ausgebildet, welches als Strömungs- und Motorgehäuse dient.

Das erste Gehäuseteil 42 erstreckt sich entlang einer Rückseite des Laufrades 12 und bildet im radial äußeren Bereich einen ersten Förderkanal 46 aus, der den Laufschaufeln 14 des Laufrades 12 axial gegenüberliegt. Dieses erste Gehäuseteil 42 ist über seinen Außenumfang an einem zum Gehäuse 44 gehörenden Gebläsekopf 48 befestigt, der das Gehäuse 44 des Seitenkanalgebläses axial begrenzt und in dem ein zweiter Förderkanal 40 ausgebildet ist, der sich mit Ausnahme eines Unterbrecherbereiches über den Umfang erstreckt und wie der erste Förderkanal 46 über einen Einlasskanal 50 Luft ansaugt, welche über die beiden Förderkanäle 46, 40 zu einem Auslasskanal 52 gefördert wird, der in einem sich tangential vom ersten Gehäuseteil 42 erstreckenden Auslassstutzen 54 ausgebildet ist. Das erste Gehäuseteil 42 umgibt den Elektromotor 16 radial und wird durch ein als Deckel dienendes drittes Gehäuseteil 56 axial an der zum Laufrad 12 gegenüberliegenden Seite geschlossen.

Im Deckelteil 56 ist das zweite Lager 30 in einer zentralen zweiten Lageraufnahme 58 angeordnet, von der aus sich das Deckelteil 56 radial bis an das erste Gehäuseteil 42 erstreckt und dort über einen sich am Außenumfang axial erstreckenden ringförmigen Vorsprung 60 flächig und vollumfänglich anliegt.

Erfindungsgemäß weist das Gehäuse 44 und im vorliegenden Ausführungsbeispiel das erste Gehäuseteil 42 des Gehäuses 44 einen einteilig mit diesem hergestellten Ansaugstutzen 66 auf, der sich entlang der gesamten axialen Länge des Stators 18 am Motorgehäuse 56 entlang erstreckt und der den Einlasskanal 50 begrenzt. Eine zwischen dem Stator 18 und dem Einlasskanal 50 angeordnete gemeinsame Wandfläche 68 dient somit einerseits als Begrenzungsfläche des ersten Gehäuseteils 42 und andererseits als Begrenzungsfläche des Einlasskanals 50.

Das Statorblech 20 ist in das erste Gehäuseteil 42 eingepresst und liegt entsprechend vollumfänglich über seine gesamte Länge gegen eine Innenwand 64 des ersten Gehäuseteils 42 an. Die Statorwicklungen 22 befinden sich in einer Vergussmasse 70, die insbesondere aus einem wärmeleitfähigen Kunststoff mit Füllstoffen besteht und die die Wicklungen 22 vollständig umgibt und einen Zwischenraum zwischen den Statorwicklungen 22 und dem Statorblech 20 vollständig ausfüllt. Zusätzlich umgibt diese Vergussmasse 70 Wicklungsköpfe 72 der Statorwicklungen 22, die über das Statorblech 20 axial hinausragen, wobei sich die Vergussmasse 70 in diesem Bereich radial bis an die Innenwand 64 des ersten Gehäuseteils 42 erstreckt, so dass auch hier eine direkte thermische Anbindung zum Gehäuseteil 42 erfolgt, welches ebenso wie das Deckelteil 56 aus einem Leichtmetallguss, insbesondere aus einem Aluminiumguss hergestellt sind. Die Vergussmasse 70 kann zur Erhöhung der Wärmeleitfähigkeit auf etwa 20W/m·K beispielsweise Füllstoffe auf mineralischer Basis enthalten, wie dies von verschiedenen Herstellern angeboten wird.

An der zum Elektromotor 16 gegenüberliegenden Seite des Ansaugstutzens 66 ist ein durch ein Elektronikgehäuse 74 begrenzter Elektronikraum 76 ausgebildet, der jedoch an seiner zum Ansaugstutzen 66 weisenden Seite durch eine Wandfläche 78 des Ansaugstutzens 66 begrenzt wird. Im Elektronikgehäuse 74 ist eine Platine 80 angeordnet, die die Elektronik 82 zur Ansteuerung des Gebläses beziehungsweise des Elektromotors 16 enthält und vollflächig über einen wärmeleitenden Kleber an der Wandfläche 78 befestigt ist.

Die Luft, die über den Ansaugstutzen 66 zum Förderkanal 46, 40 gefördert wird, bewirkt bei Drehung des Laufrades 12 eine aktive Kühlung sowohl des Stators 18 beziehungsweise der Statorwicklungen 22 als auch der Elektronik 82 mit ihren Leistungsbausteinen als auch der Lager 28, 30. So wird die in der Elektronik 82 entstehende Wärme unmittelbar an die gut Wärme leitende Wandfläche 78 des Ansaugstutzens 66 abgeführt, an dem der Luftstrom entlang strömt und so die Wärme aktiv abführt. Gleiches gilt auch für die Wärmeabfuhr aus den Lagern 28, 30 sowie den Statorwicklungen 22, aus denen die Wärme ohne isolierende zwischenliegende Luftschichten direkt in die Vergussmasse 70 geleitet wird und von hier entweder direkt oder über das Statorblech 20 zum Gehäuse 44 beziehungsweise zur gemeinsamen Wandfläche 68, an der erneut der Luftstrom zur aktiven Wärmeabfuhr vorbei führt, abgeleitet wird. Dabei sorgt die Vergussmasse 70 gleichzeitig dafür, dass auch eine erhöhte Resistenz des Elektromotors 16 gegen chemische Schmutzstoffe vorhanden ist, die aufgrund der Vergussmasse 70 weder zu den Wicklungen 22 noch zur Elektronik oder den Lagern 28, 30 gelangen können, welche ebenfalls thermisch direkt an das Gehäuse 44 angebunden sind, so dass auch die in den Lagern 28, 30 entstehende Wärme zuverlässig über das Gehäuse 44 beziehungsweise den Luftstrom abgeführt werden kann.

Es sollte deutlich sein, dass der Schutzbereich der vorliegenden Anmeldung nicht auf das beschriebene Ausführungsbeispiel beschränkt ist. Insbesondere können derartige Gebläse für verschiedene Anwendungen verwendet werden. Vor allem sind verschiedene konstruktive Varianten entsprechend den nachfolgenden Ansprüchen denkbar, wie eine andere Anbindung der Lager an das umgebende Gehäuse oder die Verwendung anderer Kunst- beziehungsweise Füllstoffe für die Vergussmasse. Weitere konstruktive Abwandlungen, die in den Schutzbereich der nachfolgenden Ansprüche fallen, beispielsweise bezüglich der vorliegenden Gehäuseteilungen sind selbstverständlich genauso denkbar, wie auch eine Anordnung des Elektromotors in einem separaten Gehäuse, in dem die Vergussmasse angeordnet ist, wobei die Gehäuseflächen des Elektromotors vollflächig und unmittelbar am Gehäuse 44 anliegen.

## Patentansprüche

1. Gebläse für einen Verbrennungsmotor mit
einem Elektromotor (16), der einen Stator (18) mit einem Statorblech (20), auf welchem Statorwicklungen (22) angeordnet sind, und einen Rotor (24) aufweist, der auf einer Antriebswelle (10) befestigt ist, einem Gehäuse (44) mit einem Gehäuseteil (42), welches den Elektromotor (16) radial umgibt, einem Förderkanal (46, 40), welcher im Gehäuse (44) ausgebildet ist, mit einem Ansaugstutzen (66), der einen Einlasskanal (50) begrenzt und einem Auslassstutzen (54), der einen Auslasskanal (52) begrenzt, einem Laufrad (12), welches auf der Antriebswelle (10) befestigt ist, und über welches Fluid vom Einlasskanal (50) über den Förderkanal (46, 40) zum Auslasskanal (52) förderbar ist,
**dadurch gekennzeichnet, dass**
die Statorwicklungen (22) mit einer wärmeleitfähigen Vergussmasse (70) umspritzt sind, wobei durch die wärmeleitfähige Vergussmasse (70), die die Statorwicklungen vollständig umgibt, eine Verkapselung der Statorwicklungen (22) erreicht wird, wobei das den Stator (18) umgebende Gehäuseteil (42) und der damit einteilig hergestellte und entlang der gesamten axialen Länge des Stators (18) erstreckende Ansaugstutzen (66) eine gemeinsame Wandfläche (68) aufweisen, an deren einen Seite der Stator (18) anliegt und an deren entgegengesetzter Seite der Einlasskanal (50) ausgebildet ist, und wobei das Gebläse ein Seitenkanalgebläse ist.

2. Gebläse für einen Verbrennungsmotor nach Anspruch 1,
**dadurch gekennzeichnet, dass**
das Statorblech (20) über seine gesamte axiale Länge vollumfänglich am Gehäuse (44) anliegt und die Vergussmasse (70) über die gesamte axiale Länge der Statorwicklungen (22) vollumfänglich am Statorblech (20) und/oder am Gehäuse (44) anliegt.

3. Gebläse für einen Verbrennungsmotor nach einem der Ansprüche 1 oder 2,
**dadurch gekennzeichnet, dass**
eine Elektronik (82) des Gebläses in einem Elektronikraum (76) angeordnet ist, welcher durch eine Wandfläche (78) des Ansaugstutzens (66) in Richtung des Ansaugstutzens (66) begrenzt ist.

4. Gebläse für einen Verbrennungsmotor nach einem der Ansprüche 1 oder 2,
**dadurch gekennzeichnet, dass**
die Elektronik (82) des Gebläses auf einer Platine (80) angeordnet ist, welche thermisch mit der Wandfläche (78) des Ansaugstutzens (66) gekoppelt ist, welche den Elektronikraum (82) begrenzt.

5. Gebläse für einen Verbrennungsmotor nach einem der vorhergehenden Ansprüche,
**dadurch gekennzeichnet, dass**
ein zwischen dem Laufrad (12) und dem Stator (18) des Elektromotors (16) angeordnetes Lager (28) in einer Lageraufnahme (36) angeordnet ist, die am Gehäuse (44) ausgebildet ist.

6. Gebläse für einen Verbrennungsmotor nach einem der Ansprüche 1 bis 4,
**dadurch gekennzeichnet, dass**
ein zwischen dem Laufrad (12) und dem Stator (18) des Elektromotors (16) angeordnetes Lager (28) in einer Lageraufnahme angeordnet ist, die im radial Inneren eines Lagerschildes ausgebildet ist, das vollflächig axial gegen das Gehäuse (44) anliegt, wobei die Lageraufnahme (36) in einer Öffnung des Gehäuses (44) angeordnet ist und radial an einer die Öffnung begrenzenden Wand des Gehäuses (44) anliegt.

7. Gebläse für einen Verbrennungsmotor nach einem der vorhergehenden Ansprüche,
**dadurch gekennzeichnet, dass**
das Statorblech (22) vollflächig radial an einer Innenwand (64) des Gehäuses (44) anliegt.

8. Gebläse für einen Verbrennungsmotor nach einem der vorhergehenden Ansprüche,
**dadurch gekennzeichnet, dass**
ein den Stator (18) radial umgebendes Gehäuseteil (42) des Gehäuses (44) aus Leichtmetall hergestellt ist.

9. Gebläse für einen Verbrennungsmotor nach Anspruch 8,
**dadurch gekennzeichnet, dass**
ein am zum Laufrad (12) entgegengesetzten Ende des Elektromotors (16) angeordnetes Lager (30) in einer separaten Lageraufnahme (58) angeordnet ist, welche über Stege mit dem radial umgebenden Gehäuseteil (42) verbunden ist.

10. Gebläse für einen Verbrennungsmotor nach Anspruch 8,
**dadurch gekennzeichnet, dass**
das am zum Laufrad (12) entgegengesetzten Ende des Elektromotors (16) angeordnete Lager (30) in einer Lageraufnahme (58) angeordnet ist, welche an einem Gehäuseteil (56) des Gehäuses (44) ausgebildet ist.

11. Gebläse für einen Verbrennungsmotor nach Anspruch 9 oder 10,
**dadurch gekennzeichnet, dass**
die Lageraufnahme (58) mit den Stegen oder das Gehäuseteil (56) aus einem Leichtmetallgussteil gebildet ist.

12. Gebläse für einen Verbrennungsmotor nach einem der vorhergehenden Ansprüche,
**dadurch gekennzeichnet, dass**
das Gehäuse (44) mehrteilig ausgebildet ist.

13. Gebläse für einen Verbrennungsmotor nach einem der vorhergehenden Ansprüche,
**dadurch gekennzeichnet, dass**
die Vergussmasse (70) ein Kunststoff mit Füllstoffen ist und einen Wärmeleitkoeffizienten von über 5W/m·K aufweist.

14. Gebläse für einen Verbrennungsmotor nach Anspruch 13,
**dadurch gekennzeichnet, dass**
die Füllstoffe auf mineralischer Basis hergestellt sind.

## Claims

1. Fan for an internal combustion engine comprising
an electric motor (16) with a stator (18) having a stator plate (20) on which stator windings (22) are arranged, and a rotor (24) which is fastened on a drive shaft (10),
a housing (44) which radially surrounds the electric motor (16),
a delivery channel (46, 40) formed in the housing (44), having an intake port (66) which delimits an inlet channel (50) and an outlet port (54) which delimits an outlet channel (52),
an impeller (12) fastened on the drive shaft (10) and via which fluid can be conveyed from the inlet channel (50) to the outlet channel (52) via the delivery channel (46, 40),
**characterized in that**
the stator windings (22) are injection molded by a thermally conductive casting compound (70), wherein an encapsulation of the stator windings (22) is achieved due to the thermally conductive casting compound (70) that surrounds the stator windings in their entirety,
wherein the housing part (42) surrounding the stator (18) and the intake manifold (66), which is formed integrally therewith and extends along all of the axial length of the stator (18), have a common wall surface (68), on one side of which the stator (18) abuts and on the opposite side of which the inlet channel (50) is formed, and wherein the fan is a side-channel blower.

2. Fan for an internal combustion engine of claim 1, **characterized in that** the stator plate (20) is in full contact with the housing (44) over its entire axial length and the casting compound (70) is in full contact with the stator plate (20) and/or on the housing (44) over the entire axial length of the stator windings (22).

3. Fan for an internal combustion engine of one of claims 1 or 2, **characterized in that** electronics (82) of the fan are arranged in an electronics chamber (76) which is delimited in the direction of the intake port (66) by a wall surface (78) of the intake port (66).

4. Fan for an internal combustion engine of one of claims 1 or 2, **characterized in that** the electronics (82) of the fan are arranged on a circuit board (80) thermally coupled to the wall surface (78) of the intake port (66) that delimits the electronics chamber (82).

5. Fan for an internal combustion engine of one of the preceding claims, **characterized in that** a bearing (28) arranged between the impeller (12) and the stator (18) of the electric motor (16) is arranged in a bearing seat (36) formed on the housing (44).

6. Fan for an internal combustion engine of one of claims 1 to 4, **characterized in that** a bearing (28) arranged between the impeller (12) and the stator (18) of the electric motor (16) is arranged in a bearing seat formed radially inside a bearing plate which is in axial surface contact with the housing (44), the bearing seat (36) being arranged in an opening of the housing (44) and resting radially against a wall of the housing (44) delimiting the opening.

7. Fan for an internal combustion engine of one of the preceding claims, **characterized in that** the stator plate (22) rests in surface contact radially against an inner wall (64) of the housing (44).

8. Fan for an internal combustion engine of one of the preceding claims, **characterized in that** a housing part (42) of the housing (44) radially surrounding the stator (18) is made of light metal.

9. Fan for an internal combustion engine of claim 8, **characterized in that** a bearing (30) arranged at the end of the electric motor (16) opposite the impeller (12) is arranged in a separate bearing seat (58) connected to the radially surrounding housing part (42) by webs.

10. Fan for an internal combustion engine of claim 8, **characterized in that** the bearing (30) arranged at the end of the electric motor (16) opposite the impeller (12) is arranged in a bearing seat (58) attached to a housing part (56) of the housing (44).

11. Fan for an internal combustion engine of claim 9 or 10, **characterized in that** the bearing seat (58) with the webs or the housing part (56) is formed from a light metal cast part.

12. Fan for an internal combustion engine of one of the preceding claims, **characterized in that** the housing (44) is of a multi-part structure.

13. Fan for an internal combustion engine of one of the preceding claims, **characterized in that** the casting compound (70) is a plastic material with fillers and has a thermal conductivity coefficient higher than 5W/m·K.

14. Fan for an internal combustion engine of claim 13, **characterized in that** the fillers are made on a mineral basis.

## Revendications

1. Ventilateur pour un moteur à combustion interne comprenant
un moteur électrique (16) avec un stator (18) ayant une plaque de stator (20) sur laquelle sont disposés des enroulements de stator (22), et avec un rotor (24) fixé sur un arbre d'entrainement (10),
un carter (44) avec une partie de carter (42) entourant le moteur électrique (16),
un canal d'alimentation (46, 40) formé dans le carter (44), avec un orifice d'admission (66) délimitant un canal d'entrée (50) et un orifice de sortie (54) délimitant un canal de sortie (52),
une roue à aubes (12) fixée à l'arbre d'entrainement (10) et par laquelle le fluide peut être transporté du canal d'entrée (50) vers le canal de sortie (52) via le canal de refoulement (46, 40)
**caractérisé en ce que**
les enroulements de stator (22) sont surmoulées avec un composé d'enrobage thermoconducteur (70), le composé d'enrobage thermoconducteur (70) complètement entourant les enroulements de stator ainsi permettant d'obtenir une encapsulation des enroulements de stator (22), la partie de carter (42) entourant le stator (18) et l'orifice d'admission (66) ayant une surface de paroi commune (68), sur un côté duquel reste le stator (18) et sur le côté opposé de la surface le canal d'entrée (50) est formé, le ventilateur étant un ventilateur à canal latéral.

2. Ventilateur pour moteur à combustion interne selon la revendication 1, **caractérisé en ce que** la plaque de stator (20) est en plein contact avec le carter (44) sur toute sa longueur axiale et le composé d'enrobage (70) est en plein contact avec la plaque de stator (20) sur toute la longueur axiale des enroulements de stator (22) et/ou sur le carter (44).

3. Ventilateur pour un moteur à combustion interne selon l'une des revendications 1 ou 2, **caractérisé en ce que** l'électronique (82) du ventilateur est disposée dans une chambre d'électronique (76) délimitée, en direction de l'orifice d'admission (66), par une surface de paroi (78) de l'orifice d'admission (66).

4. Ventilateur pour un moteur à combustion interne selon l'une des revendications 1 ou 2, **caractérisé en ce que** l'électronique (82) du ventilateur est disposée sur une carte de circuit imprimé (80) couplée thermiquement à la surface de paroi (78) de l'orifice d'admission (66) qui délimite la chambre d'électronique (82) limitée.

5. Ventilateur pour moteur à combustion interne selon l'une quelconque des revendications précédentes, **caractérisé en ce qu'**un palier (28) disposé entre la roue à aubes (12) et le stator (18) du moteur électrique (16) est disposé dans un logement de palier (36) formé sur le carter (44).

6. Ventilateur pour moteur à combustion interne selon l'une des revendications 1 à 4, **caractérisé en ce qu'**un palier (28) disposé entre la roue à aubes (12) et le stator (18) du moteur électrique (16) est disposé dans un logement de palier formé radialement à l'intérieur d'un flasque-palier, lequel s'appuie axialement sur le carter (44) sur toute sa surface, le logement de palier (36) étant disposé dans une ouverture du carter (44) et s'appuyant radialement sur une paroi du carter (44) délimitant l'ouverture.

7. Ventilateur pour moteur à combustion interne selon l'une quelconque des revendications précédentes, **caractérisé en ce que** toute la plaque du stator (22) s'appuie radialement sur une paroi intérieure (64) du carter (44).

8. Ventilateur pour moteur à combustion interne selon l'une quelconque des revendications précédentes, **caractérisé en ce qu'**une partie de carter (42) du carter (44) radialement entourant le stator (18) est en métal léger.

9. Ventilateur pour un moteur à combustion interne selon la revendication 8, **caractérisé en ce qu'**un palier (30) disposé à l'extrémité du moteur électrique (16) opposée à la roue à aubes (12) est disposé dans un logement de palier séparé (58) relié à la partie de carter (42) radialement entourant.

10. Ventilateur pour moteur à combustion interne selon la revendication 8, **caractérisé en ce que** le palier (30) disposé à l'extrémité du moteur électrique (16) opposée à la roue à aubes (12) est disposé dans un logement de palier (58) formé dans une partie de carter (56) du carter (44).

11. Ventilateur pour un moteur à combustion interne selon la revendication 9 ou 10, **caractérisé en ce que** le support de palier (58) avec les entretoises ou la partie de carter (56) est formé à partir d'une pièce moulée en métal léger.

12. Ventilateur pour moteur à combustion interne selon l'une quelconque des revendications précédentes, **caractérisé en ce que** le carter (44) est réalisé en plusieurs parties.

13. Ventilateur pour moteur à combustion interne selon l'une quelconque des revendications précédentes, **caractérisé en ce que** le composé d'enrobage (70) est une matière plastique avec des agents de charge et a un coefficient de conductivité thermique supérieur à 5W/m·K.

14. Ventilateur pour moteur à combustion interne selon la revendication 13, **caractérisé en ce que** les agents de charge sont à base minérale.
